Europäisches Patentamt

European Patent Office

Office européen des brevets

(11) Veröffentlichungsnummer: **0 064 643**
**A1**

## (12) EUROPÄISCHE PATENTANMELDUNG

(21) Anmeldenummer: **82103434.5**

(22) Anmeldetag: **23.04.82**

(51) Int. Cl.³: **F 16 K 31/02**

(30) Priorität: **07.05.81 DE 3118047**

(43) Veröffentlichungstag der Anmeldung:
**17.11.82 Patentblatt 82/46**

(84) Benannte Vertragsstaaten:
**AT BE CH FR GB IT LI NL SE**

(71) Anmelder: **Karl Dungs GmbH & Co.**

**D-7067 Urbach(DE)**

(72) Erfinder: **Dungs, Karl**
**Künkelinstrasse 52**
**D-7060 Schorndorf(DE)**

(72) Erfinder: **Feucht, Friedrich**
**Weinbergweg 56**
**D-7064 Remshalden(DE)**

(74) Vertreter: **Patentanwälte Kohler - Schwindling - Späth**
**Hohentwielstrasse 41**
**D-7000 Stuttgart 1(DE)**

(54) **Doppelmagnetventil.**

(57) Die Erfindung betrifft ein Doppelmagnetventil mit zwei Ventilsitzen (18 und 19) und zwei beweglichen Ventilgliedern (15 und 16), die von je einem Anker (5 und 6) betätigbar sind, der sich im Magnetfeld je einer Spule (9 und 10) befindet, wobei jeder magnetische Kreis an den Spulenstirnseiten vorgesehene ferromagnetische Platten (1 und 2) und eine den Anker umgebende Magnetschlußhülse (3 bzw. 4) aufweist, die in ihrem Verlauf eine Ringzone (13 bzw. 14) aus nichtferromagnetischem Material aufweist, die bei erregter Spule von dem angezogenen Anker (5 bzw. 6) magnetisch überbrückt ist. Um einen vereinfachten und kompakten Aufbau zu erhalten, weisen die beiden Spulen (9 und 10) gemeinsame ferromagnetische Platten (1 und 2) auf, und es sind die beiden Magnetschlußhülsen (3 und 4) für den magnetischen Fluß in Reihe geschaltet, wobei bevorzugt die beiden Spulen (9 und 10) mit zueinander parallelen Achsen nebeneinander angeordnet sind und ihre Stirnflächen in gemeinsamen Ebenen liegen und gemeinsam ein- und ausschaltbar sind.

Anmelderin:

Karl Dungs GmbH & Co
D 7067 Urbach

Stuttgart, den 20. April 1982
P 4028 EP

Vertreter:

Kohler-Schwindling-Späth
Patentanwälte
Hohentwielstr. 41
D 7000 Stuttgart 1

## Doppelmagnetventil

Die Erfindung betrifft ein Doppelmagnetventil mit zwei Ventilsitzen und zwei beweglichen Ventilgliedern, die von je einem Anker betätigbar sind, der sich im Magnetfeld je einer Spule befindet, wobei jeder magnetische Kreis an den Spulenstirnseiten vorgesehene ferromagnetische Platten und eine den Anker umgebende Magnetschlußhülse aufweist, die in ihrem Verlauf eine Ringzone aus nichtferromagnetischem Material aufweist, die bei erregter Spule von dem angezogenen Anker
magnetisch überbrückt ist.

Doppelmagnetventile sind in verschiedener Bauart bekannt.
Teils bestehen sie aus zwei mechanisch, elektrisch und
magnetisch voneinander unabhängigen, in einem gemeinsamen
Gehäuse untergebrachten Ventilen. Teils weisen sie ein gemeinsames bewegliches Ventilglied mit einem gemeinsamen
Anker auf, der durch zwei Magnetsysteme in zwei verschiedene
Öffnungsstellungen bewegbar ist, wobei beispielsweise die
eine durch einen Anschlag definiert ist, der durch den zweiten Magneten ausrückbar ist, wodurch eine geschlossene Ventilstellung, eine gedrosselte Öffnungsstellung und eine ungedrosselte Öffnungsstellung eingestellt werden können.
Derartige Ventile werden insbesondere in Gasheizungsanlagen
verwendet, wobei die gedrosselte Öffnungsstellung eine Zündgasmenge und die ungedrosselte Öffnungstellung die volle für
den Brenner geeignete Gasmenge durchläßt. Aus Gründen der
Sicherheit sowie der Möglichkeit der Dichtigkeitsüberprüfung
werden jedoch häufig entweder zwei Ventile oder aber Ventile
mit zwei Ventilsitzen und zwei beweglichen von je einem Anker
betätigten Ventilgliedern gefordert  werden. Das magnetische
Feld wird von je einer Zylinderspule erzeugt, die eine
Magnetschlußhülse umgibt, in der der ferromagnetische Anker
axial verschiebbar geführt ist. Die Magnetschlußhülse weist
in bekannter Weise eine ringförmige Zone aus einem unmagnetischen Material, beispielsweise Messing, auf. An den Stirnenden der Spulen sind ferromagnetische Platten mit der
Magnetschlußhülse verbunden und es ist der magnetische Kreis
durch einen die Spule umgebenden ferromagnetischen Rohrabschnitt geschlossen, der fest mit den beiden Platten verbunden ist. Der magnetische Kreis umfaßt also die Reihenschaltung der Magnetschlußhülse, einer Platte, des Rohrabschnittes, der anderen Platte und wiederum der Magnetschlußhülse.
Diese Anordung ist insgesamt für jedes Ventil einmal vorgesehen. Jeder Spule ist ferner ein eigener Anschlußkasten zugeordnet, in dem zu jeder Spule ein Gleichrichter untergebracht ist, um das Ventil mit Wechselstrom speisen zu können.

Aufgabe der vorliegenden Erfindung ist es, das bekannte
Doppelmagnetventil so zu vereinfachen, daß es mit weniger
Aufwand für den Magnetantrieb verwirklicht werden kann.

Gelöst wird diese Aufgabe bei einem Doppelmagnetventil der
eingangs genannten Art erfindungsgemäß dadurch, daß die
beiden Spulen gemeinsame ferromagnetische Platten aufweisen
und daß die beiden Magnetschlußhülsen für den magnetischen
Fluß in Reihe geschaltet sind. Durch die Reihenschaltung der
Magnetschlußhülsen hinsichtlich des magnetichen Flusses läßt
sich der bauliche Aufwand reduzieren. Beispielsweise läßt
sich die Anzahl der ferromagnetischen Platten von vier auf
zwei vermindern. Sind dabei die Magnetschlußhülsen gleichachsig aufeinanderfolgend angeordnet (und entsprechend auch
die Anker), dann ist für das Schließen des magnetischen
Kreises statt seither zwei nur noch ein Rohrabschnitt erforderlich. Eine solche Bauweise bedingt jedoch entweder, daß
die beiden beweglichen magnetischen Ventilglieder und die
Ventilsitze an einander gegenüberliegenden Seiten und die
Magnetanordnung dazwischen angeordnet ist, oder es muß die Betätigungdes einen Ankers durch den anderen Anker und das
andere bewegliche Ventilglied hindurchgeführt sein. Beide
Methoden führen nicht zu konstruktiv überzeugenden Lösungen,
weshalb gemäß einer bevorzugten Ausführungsform der Erfindung
die beiden Spulen mit zueinander parallelen Achsen nebeneinander angeordnet sind und ihre Stirnflächen in gemeinsamen
Ebenen liegen. Auch hierbei weisen die beiden Spulen gemeinsame ferromagnetische Platten auf und es fließt der magnetische Fluß aufeinanderfolgend durch die beiden Magnetschlußhülsen; darüberhinaus sind jedoch keine Rohrabschnitte
mehr erforderlich, weil die eine Magnetschlußhülse den
magnetischen Rückschluß für die andere Magnetschlußhülse
bildet. Diese Ausführungsform ist daher besonders vorteilhaft, weil einerseits der Aufwand gering ist und andererseits eine kompakte, gedrungene Bauform erzielt ist.

Gemäß einer bevorzugten weiteren Ausgestaltung der Erfindung
sind die beiden Spulen elektrisch parallel oder in Serie zueinander geschaltet und gemeinsam einschaltbar und es ist
ferner in der Bewegungsbahn eines der beiden Anker eine
hydraulische oder pneumatische, an sich bekannte Verzögerungspatrone angeordnet. Trotz des gemeinsamen Ein-und Ausschaltens der beiden Ventile wird den Sicherheitsanforderungen und der Möglichkeit, eine Dichtigkeitskontrolle vornehmen zu können Rechnung getragen. Darüberhinaus läßt sich
jedoch durch die Verzögerungspatrone noch erreichen, daß zunächst ein gedrosselter Durchsatz (Zündgasmenge) und erst danach der volle Durchsatz für den regulären Betrieb des Gasbrenners erreicht wird. Dabei ist ferner von Vorteil, daß
nach dem Anziehen des ersten Ankers die Ringzone in der einen Magnetschlußhülse ferromagnetisch überbrückt ist, wodurch der magnetische Widerstand im magnetischen Kreis reduziert und somit eine erhöhte magnetische Kraft auf den anderen Anker ausgeübt wird, der dadurch besser in die Lage versetzt wird, die hydraulische oder pneumatische Verzögerungspatrone zu betätigen. Es lassen sich also durch die Erfindung auch die Schaltleistung und das Schaltverhalten optimieren, wobei ferner zu berücksichtigen ist, daß aufgrund dieser Bauart die thermische Belastbarkeit der Spulen erhöht und der Kupferbedarf reduziert werden kann.

Die gemeinsame Ein- und Ausschaltung der beiden Ventile ermöglicht es schließlich auch, die beiden Spulen über einen gemeinsamen Gleichrichter zu speisen und einen gemeinsamen Anschlußkasten vorzusehen. Dadurch läßt sich der Aufwand für die Verwirklichung des Doppelmagnetventiles noch zusätzlich reduzieren.

Weitere Einzelheiten und Ausgestaltungen der vorliegenden Erfindung ergeben sich aus der nachfolgenden Beschreibung eines in der Zeichnung dargestellten Ausführungsbeispieles im Zusamenhang mit den Ansprüchen. In der Zeichnung ist der magnetische Kreis eines Doppelmagnetventiles schematisch unter Weglassung aller für das Verständnis der Erfindung nicht erforderlichen Einzelheiten dargestellt.

Der magnetische Kreis umfaßt eine obere ferromagnetische Platte 1 und eine dazu parallel im Abstand angeordnete untere ferromagnetische Platte 2, zwischen denen sich zwei zueinander achsparallele Magnetschlußhülsen 3 und 4 befinden, die mit ihren Stirnseiten an den Platten 1 und 2 befestigt sind. Die Platte 2 ist jeweils koaxial zu den beiden Magnetschlußhülsen 3 und 4 durchbohrt, um je einen Anker 5 und 6 durchtreten zu lassen, an deren Enden 7 bzw. 8 bewegliche Ventilglieder angebracht sind, die mit in einem gemeinsamen Gehäuse 17 angeordneten Ventilsitzen 18 und 19 zusammenwirken, von denen sie beim Anziehen der Anker 5 und 6 abgehoben werden, wobei sich die Anker 5 und 6 in Richtung auf die ferromagnetische Platte 1 bewegen. Der Hub des Ankers 5 ist durch einen Anschlag in Gestalt einer koaxialen Schraube 20 innerhalb der Magnetschlußhülse 3 in bekannter Weise einstellbar. Die Magnetschlußhülsen 3 und 4 bestehen aus zwei ferromagnetischen Abschnitten 3', 3'' bzw. 4', 4'', zwischen denen eine kurze Ringzone 13 bzw. 14 aus nichtferromagnetischem Material, beispielsweise aus Messing, angeordnet ist, die einen magnetischen "Luft"spalt bilden, der von dem angezogenen Anker 5 bzw. 6 magnetisch überbrückt wird. Anstelle der Anschlagschraube 20 für den Anker 5 ist in der Magnetschlußhülse 4, ebenfalls von der Seite der Platte 1 aus eingedreht, eine hydraulische Verzögerungspatrone 22 vorgesehen, die durch den Anker 6 zusammendrückbar ist. Die Verwendung derartiger Verzögerungspatronen bei Magnetventilen ist bekannt.

Um die beiden Magnetschlußhülsen 3 und 4 ist jeweils eine Spule 9 bzw. 10 gewickelt, die elektrisch parallel oder in Reihe geschaltet sein können und deren Anschlüsse an einen Gleichrichter 11 geführt sind, dessen Primäranschlüsse 12 unmittelbar oder über einen Transformator mit dem speisenden Wechselstromnetz verbindbar sind.

Der von den beiden jeweils gemeinsam eingeschalteten
Spulen 9 und 10 jeweils hälftig erregte magnetische Fluß
fließt von der einen Magnetschlußhülse zur oberen Platte 1,
von hier weiter zur anderen Magnetschlußhülse, und durch
diese hindurch zur unteren Platte 2 und von hier wieder zurück zur erstgenannten Magnetschlußhülse.Dabei muß der
magnetische Fluß, solange die beiden Anker nicht angezogen
haben, zwei "Luft"spalte 13 und 14 in den Magnetschlußhülsen
überwinden. Sobald der unverzögerte Anker 5 angezogen hat,
ist der "Luft"spalt 13 in der Magnetschlußhülse 3 überbrückt, wodurch sich der magnetische Widerstand im magnetischen Kreis vermindert und der dadurch erhöhte magnetische
Fluß eine erhöhte Kraft auf den verzögernd arbeitenden
Anker 6 ausübt. Dies läßt eine vorteilhafte Dimensionierung
der Spulen, der Anker und des gesamten magnetischen Kreises
zu.

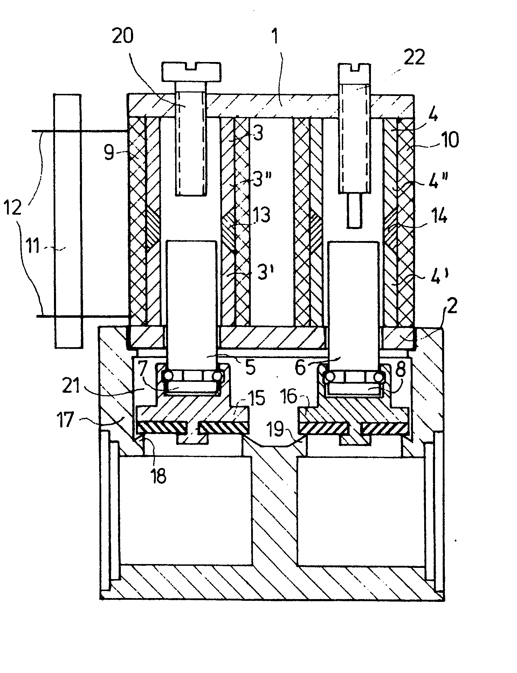

Die beiden von den beiden Ankern 5 und 6 betätigten Ventile
begrenzen in geschlossener Lage zusammen mit dem Gehäuse
eine Kammer 21, die in bekannter Weise zur Dichtigkeitsprüfung verwendet werden kann. Beim Öffnen begrenzt das verzögernd öffnende Ventil des Ankers 6 die Zündgasmenge und läßt
erst nach dem vollständigen Öffnen die normale, auf die
Brennerleistung abbgestimmte Gasmenge durch. Diese Abstimmung kann durch entsprechendes Feinregulieren der Anschlagschraube 20 für den Anker 5 vorgenommen werden, die parallel
zur Verzögerungspatrone 13 angeordnet und durch die obere
Platte 1 hindurch eingeschraubt wird. Hinsichtlich seines
mechanischen Aufbaues ist das Ventil beispielsweise so aufgebaut, wie es in den Fig.1 und 4 der DE-OS 25 59 323 derselben Anmelderin dargestellt ist.

—

Derartige Doppelventile sind jedoch nicht nur in Gasfeuerungsanlagen vorteilhaft einzusetzen, sondern auch in
anderen Anlagen, in denen miteinander gekoppelte Ventile benötigt werden. Beispielsweise kann das erfindungsgemäße Doppelventil in Ölfeuerungsanlagen eingesetzt werden, wobei
eines der Ventile im Zulaufstrang und das andere im Rücklauf
angeordnet wird. Dabei weist dann das Gehäuse entgegen der
Darstellung in der Zeichnung vier Anschlüsse auf und es ist
die mittlere Trennwand durchgehend ausgeführt, wobei jedes
Ventil für sich durchströmt wird und nicht, wie bei der dargestellten Ausführungsform, die beiden Ventile hintereinander durchströmt werden. Man erhält somit eine zuverlässige
Öffnung bzw. Schließung sowohl des Zulaufstranges als auch
des Rücklaufs.

Patentansprüche

1. Doppelmagnetventil mit zwei Ventilsitzen und zwei
beweglichen Ventilgliedern, die von je einem Anker
betätigbar sind, der sich im Magnetfeld je einer Spule
befindet, wobei jeder magnetische Kreis an den
Spulenstirnseiten vorgesehene ferromagnetische Platten
und eine den Anker umgebende Magnetschlußhülse
aufweist, die in ihrem Verlauf eine Ringzone aus
nichtferromagnetischem Material aufweist, die bei
erregter Spule von dem angezogenen Anker magnetisch
überbrückt ist, dadurch gekennzeichnet, daß die beiden
Spulen (9 und 10) gemeinsame ferromagnetische
Platten (1 und 2) aufweisen, und daß die beiden
Magnetschlußhülsen (3 und 4) für den magnetischen Fluß
in Reihe geschaltet sind.

2. Doppelmagnetventil nach Anspruch 1, dadurch
gekennzeichnet, daß die beiden Spulen (9 und 10) mit
zueinander parallelen Achsen nebeneinander angeordnet
sind und ihre Stirnflächen in gemeinsamen Ebenen
liegen.

3. Doppelmagnetventil nach Anspruch 1 oder 2, dadurch
gekennzeichnet, daß die beiden Spulen (9 und 10)
elektrisch parallel oder in Serie zueinander geschaltet und gemeinsam einschaltbar sind, und daß in

2 **0064643**

der Bewegungsbahn eines der beiden Anker (6) eine hydraulische oder pneumatische, an sich bekannte Verzögerungspatrone (13) angeordnet ist.

4. Doppelmagnetventil nach einem der vorhergehenden Ansprüche, dadurch gekennzeichnet, daß die beiden Spulen (9 und 10) über einen gemeinsamen Gleichrichter (11) gespeist sind.

0064643

## 0064643

Nummer der Anmeldung

**EUROPÄISCHER RECHERCHENBERICHT**

Europäisches Patentamt

EP 82103434.5

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| P,A | GB - A - 2 062 175 (A.J. WILSON) (20-05-1981) <br> * Seite 2, Spalte 1, Absatz 3; Fig. 3 * <br> -- | 1-3 | F 16 K 31/02 |
| A | CH - A - 536 961 (FA. RAUSCH & PAUSCH) <br> * Seite 1, Spalte 1, Zeile 62 - Spalte 2, Zeile 2; Fig. 2 * <br> -- | 1 | |
| A | US - A - 3 499 463 (F.G. TROTT) <br> * Spalte 1, Zeile 60 - Spalte 2, Zeile 67; Fig. 1 * <br> -- | 1-3 | **RECHERCHIERTE SACHGEBIETE (Int. Cl.³)** <br><br> F 16 K 11/00 |
| A | DE - C - 936 838 (FA. E. HERION) <br> * Seite 2, rechte Spalte, Zeilen 85-91 * <br> -- | 1,3 | F 16 K 31/00 |
| A | DE - B - 1 104 780 (THE SKINNER CHUCK COMP.) <br> * Fig. 1 * <br> -- | 1,2 | |
| D,A | DE - A1 - 2 559 323 (FA. K. DUNGS) <br> * Seite 14, Zeilen 3-9; Fig. 1 * <br> ---- | 1,3 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | |
|---|---|---|
| Recherchenort <br> WIEN | Abschlußdatum der Recherche <br> 12-08-1982 | Prüfer <br> ROUSSARIAN |

EPA form 1503.1 06.78